# EUROPEAN PATENT APPLICATION

(11) **EP 3 454 487 A1**
(43) Date of publication of application: **13.03.2019**
(21) Application number: 17792742.3
(22) Date of filing: 28.04.2017
(51) Int. Cl.: H04J 1/00, H04L 1/16, H04W 72/12

(54) **USER TERMINAL AND WIRELESS COMMUNICATION METHOD**

(30) Priority: 02.05.2016 JP 2016092683
(71) Applicant: NTT DOCOMO, INC., Chiyoda-ku Tokyo 100-6150 (JP)
(72) Inventor: SAITO, Keisuke, Tokyo 100-6150 (JP); TAKEDA, Kazuki, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2017/016876
(87) International publication number: WO 2017/191809

(57) **Abstract**

The present invention is designed to achieve the advantages of dynamic subframe utilization even when FDD is used in future radio communication systems. A receiving section that receives a DL signal in a DL subframe, a transmission section that transmits a UL signal in a UL subframe, and a control section that controls the receipt of the DL signal and the transmission of the UL signal in frequency division duplex (FDD), which use different frequencies, are provided, and a predetermined offset is configured so that the time at which the UL subframe starts comes after the time a DL subframe that is associated with the UL subframe begins.

## Description

### Technical Field

The present invention relates to a user terminal and a radio communication method in a next-generation mobile communication system.

### Background Art

In the UMTS (Universal Mobile Telecommunications System) network, the specifications of long term evolution (LTE) have been drafted for the purpose of further increasing high speed data rates, providing lower latency and so on (see non-patent literature 1). In addition, successor systems of LTE (referred to as, for example, "LTE-A (LTE-Advanced)," "FRA (Future Radio Access)," "5G (5th generation mobile communication system)," "New-RAT (Radio Access Technology)" and so on) are also under study for the purpose of achieving further broadbandization and increased speed beyond LTE.

Existing LTE systems use control based on TDD (Time Division Duplex) and FDD (Frequency Division Duplex). For example, in FDD, UL communication and DL communication are controlled using different frequencies. In TDD, UL communication and DL communication are controlled using the same frequency. For example, in TDD, whether each subframe in a radio frame is used in the uplink ("UL") or in the downlink ("DL") is determined strictly based on UL/DL configurations.

### Citation List

Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

### Summary of Invention

### Technical Problem

Now, for future radio communication systems such as LTE Rel. 13 and later versions (for example, 5G), radio frames (also referred to as "lean radio frames") to provide good future scalability and excellent power saving performance are under study. To provide such radio frames, it may be possible to use subframes having no predetermined use (for example, the direction of communication such as DL and/or UL, the type and format of signals such as data, reference signal, sounding, feedback information, etc.), except for some subframes. These subframes are also referred to as "dynamic subframes."

Studies are in progress to design future radio communication systems, which employ dynamic subframes, based on time division duplex (TDD), which switches DL communication and UL communication over time in the same frequency band. Meanwhile, future radio communication systems are also expected to support frequency division duplex (FDD), in which DL communication and UL communication are performed in different frequency bands.

However, when dynamic subframes are employed, if the FDD communication scheme in existing LTE systems is applied on an as-is basis, there is a fear that dynamic subframe utilization offers only limited advantages (for example, limited reduction of latency).

The present invention has been made in view of the above, and it is therefore an object of the present invention to provide a user terminal and a radio communication method, whereby the advantages of dynamic subframe utilization can be achieved even when FDD is used in future radio communication systems.

### Solution to Problem

According to one aspect of the present invention, a user terminal has a receiving section that receives a DL signal in a DL subframe, a transmission section that transmits a UL signal in a UL subframe, and a control section that controls reception of the DL signal and transmission of the UL signal which use different frequencies in frequency division duplex (FDD), and, in this user terminal, a given offset is configured so that a start time of the UL subframe comes after a start time of a DL subframe that is associated with the UL subframe.

### Advantageous Effects of Invention

According to the present invention, the advantages of dynamic subframe utilization can be achieved even when FDD is used in future radio communication systems.

### Brief Description of Drawings

FIG. 1 is a diagram to show an example of the structure of lean radio frames;
FIGs. 2A to 2E are diagrams to show examples of the method of allocating signals/channels;
FIGs. 3A to 3D are diagrams to show examples of frame formats for use when TDD is employed;
FIG. 4 is a diagram to show an example of a frame format for use when FDD is employed;
FIG. 5 is a diagram to show another example of a frame format for use when FDD is employed;
FIG. 6A and FIG. 6B are diagrams to show examples of HARQ-ACK transmission when FDD is employed;
FIGs. 7A and 7B are diagrams to show examples of UL data transmission when FDD is employed;
FIGs. 8A and 8B are diagrams to show variations of UL transmission when FDD is employed;
FIG. 9 is a diagram to show an example of a schematic structure of a radio communication system according to the present embodiment;
FIG. 10 is a diagram to show an example of an overall structure of a radio base station according to the present embodiment;
FIG. 11 is a diagram to show an example of a functional structure of a radio base station according to the present embodiment; FIG. 12 is a diagram to show an example of an overall structure of a user terminal according to the present embodiment; FIG. 13 is a diagram to show an example of a functional structure of a user terminal according to the present embodiment; and
FIG. 14 is a diagram to show an example of a hardware structure of a radio base station and a user terminal according to the present embodiment.

### Description of Embodiments

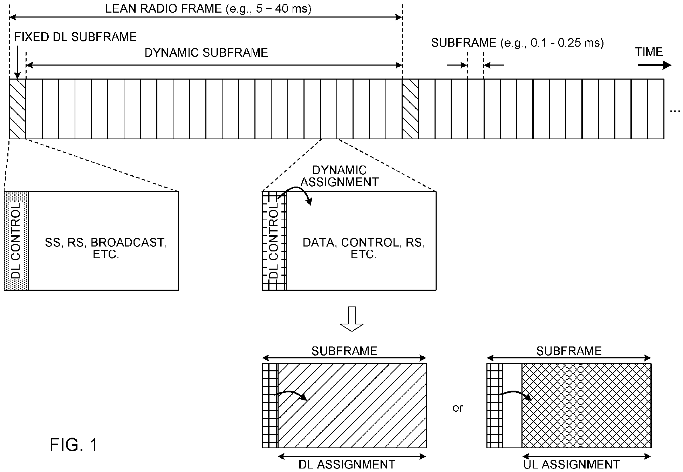

Now, an example of a communication method to use lean radio frames in future radio communication systems (for example, 5G) such as LTE Rel. 13 and later versions will be described below with reference to FIG. 1. FIG. 1 is a diagram to show an example of the structure of lean radio frames. As shown in FIG. 1, lean radio frames have a predetermined time duration (for example, five to forty ms). A lean radio frame is comprised of a plurality of subframes, where each subframe has a predetermined time duration (for example, 0.125 ms, 0.25 ms, 1 ms, etc.).

Subframes in lean radio frames have a shorter time duration than the subframes of existing LTE systems (LTE Rel. 8 to 12). As a result of this, subframes in lean radio frames can be transmitted and received in a short time compared to existing LTE systems.

Lean radio frames can be configured to include fixed subframes whose use (for example, the direction of communication, and/or the signal to transmit) is determined in advance (also referred to as "fixed subframes"), and subframes whose use is not determined in advance. Subframes without a predetermined use are also referred to as "dynamic subframes," "flexible subframes," "dynamically-utilized subframes" and so on.

In a lean radio frame, the timing of a fixed subframe may be determined in advance (for example, subframes #0 and #5), or may be configured via higher layer signaling such as RRC (Radio Resource Control) signaling or via broadcast signaling. Furthermore, the timings of fixed subframes may vary per cell (that is, offset values may be provided on a per cell basis). For example, referring to FIG. 1, fixed subframes (fixed DL subframes), which are configured in advance as DL subframes, are provided in a predetermined cycle (which is, for example, five ms or more).

Also, the cycle of fixed subframes is configured and selected by a radio base station from integer multiples of a given cycle (for example, integer multiples of five ms, such as five ms, ten ms, fifteen ms, twenty ms, etc.), from the second powers of a given cycle (for example, second powers of five ms, such as five ms, ten ms, twenty ms, forty ms, etc.). A user terminal may blind-detect (without signaling) one cycle from candidate fixed-subframe cycles.

Note that multiple fixed DL subframes may be configured in a lean radio frame. In this case, fixed DL subframes may be mapped so as to concentrate at a specific time within a lean radio frame (for example, in a specific period of two ms within a cycle of ten ms), so that it is possible to make the cycle of fixed DL subframes longer, and reduce energy consumption in, for example, radio base stations and user terminals that perform transmission/receipt using fixed DL subframes.

Meanwhile, by mapping fixed DL subframes so as to be distributed within a lean radio frame, it is possible to make the cycle of fixed DL subframes shorter, which can, for example, make it easier to build quality connections with user terminals that move at high speeds. The locations and the cycle of time resources for fixed DL subframes may be selected by a radio base station from a plurality of combinations that are prepared in advance, and a possible combination may be detected by a user terminal on a blind basis, or the locations and the cycle of time resources for fixed DL subframes may be reported from the radio base station to the user terminal via broadcast signals, RRC signaling and so on.

Also, although not shown in the drawings, fixed subframes (fixed UL subframes) that are configured in advance as UL subframes may be provided in lean radio frames. In these fixed UL subframes, resources for the signals (for example, random access preambles) for initial access (stand-alone operation) to cells using lean radio frames may be reserved. These fixed UL subframes may be configured by broadcast information or higher layer signaling, or may be indicated through physical layer signaling. If there is no configuration or indication in particular, it is possible to assume that there are no fixed UL subframes in this carrier's lean radio frames. In this case, more radio resources can be used as dynamic subframes.

Also, the use of dynamic subframes may be designated by a DL control signal (also referred to as a "DL control channel," an "L1/L2 control signal," an "L1/L2 control channel" and so on) in each dynamic subframe (dynamic assignment), or may be designated by fixed DL subframes (semi-dynamic assignment). FIG. 1 shows a case where downlink control information (or a downlink control channel) that is transmitted in a dynamic subframe indicates, to the user terminal, assignment of DL transmission (DL assignment) or assignment of uplink transmission (UL assignment) in this dynamic subframe.

As shown in FIG. 1, fixed DL subframes are used to transmit signals for cell discovery (detection), synchronization, measurements (for example, RRM (Radio Resource Management) measurements including RSRP (Reference Signal Received Power) measurements), mobility control, initial access control, and so on.

The signals to be transmitted in fixed DL subframes may be, for example, at least one of a detection signal, a detection measurement signal, a measurement signal, a mobility measurement signal, a discovery reference signal (DRS), a discovery signal (DS), synchronization signals (PSS (Primary Synchronization Signal) and/or SSS (Secondary Synchronization Signal),) a broadcast signal (broadcast information (MIB (Master Information Block) and/or system information (SIBs (System Information Blocks)) and a channel state information reference signal (CSI-RS).

Furthermore, a signal to be transmitted in fixed DL subframes may be transmitted a number of times within the same fixed DL subframe. A higher received-signal-to-interference-plus-noise-ratio (SINR) can be achieved by allowing the same signal to be transmitted a plurality of times and combined at the receiving end. Furthermore, different kinds of transmission beamforming (or pre-coding) may be applied to a signal that is transmitted a plurality of times in a fixed DL subframe, by using a plurality of transmission antenna elements (or multiple transmission antenna ports), every transmission signal can have a different directivity and a different coverage.

Also, the signals to be transmitted in a fixed DL subframe may be designated by a DL control signals in the fixed DL subframe, may be determined in advance, or may be configured via RRC signaling. If the signals to be transmitted in fixed DL subframes are designated by DL control signals, a radio base station can command a user terminal to receive DL data, DL sounding RSs and so on, in fixed DL subframes (scheduling).

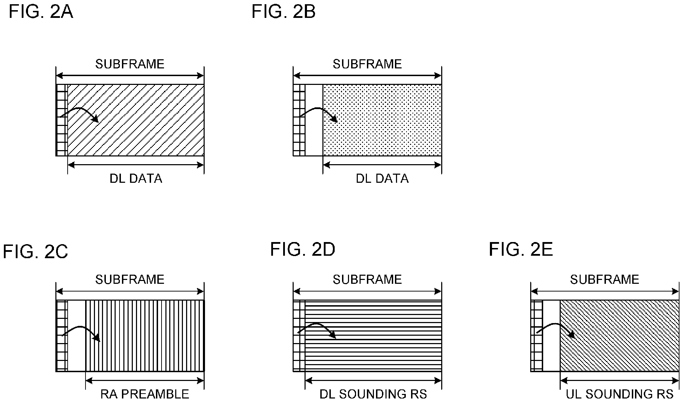

Meanwhile, dynamic subframes can be used to transmit signals such as DL data (see FIG. 2A), UL data (see FIG. 2B), random access preambles (see FIG. 2C), DL sounding reference signals (see FIG. 2D), UL sounding reference signals (see FIG. 2E), and so on. Each signal that is transmitted can be specified by the DL control information of the dynamic subframe (or the fixed DL subframe).

Furthermore, in dynamic subframes, assignment may be performed so that transmission/receipt control (scheduling) is completed within dynamic subframes, in order to enable short-time communication. This type of assignment is also referred to as "self-contained assignment." Subframes, in which self-contained assignment is performed, may be referred to as "self-containment subframes." Self-contained subframes may be referred to as "self-contained TTIs" or "self-contained symbol sets," or other names may be applied as well.

Furthermore, in FIG. 1, the DL control information is time-division-multiplexed (TDM: Time Division Multiplexing) with other signals (for example, with data signals and other signals), but this is by no means limiting. The DL control information may be time-division-multiplexed (TDM) and/or frequency-division-multiplexed (FDM: Frequency Division Multiplexing) with other signals, or may be embedded in data signals (or placed in some of the resource elements (REs) of the symbols assigned to the data signals).

Studies are in progress to design such future radio communication systems, which adopt dynamic subframe utilization, based on TDD. Meanwhile, even in future radio communication systems, the applicable duplex mode may vary depending on the frequency band, the mode of operation, and so on. When it comes to future communication schemes, although TDD control has been studied as described above, it is also necessary to study how to exert FDD-based control.

For example, it may be possible to apply the FDD communication scheme in existing LTE systems on an as-is basis. However, in this case, there is a fear that the advantages of dynamic subframe utilization (such as reduction of latency) cannot be achieved sufficiently as compared with when the above-mentioned TDD control is used. In existing LTE systems, for example, the timing to transmit a delivery acknowledgment signal (HARQ-ACK) in response to DL data and the timing to transmit UL data in response to a UL grant come a predetermined period (four subframes) after the subframe in which a DL signal is received. Therefore, if the same timings as in FDD in existing LTE systems are used, the latency may increase as compared with TDD control.

Therefore, the present inventors have focused on the fact that, when FDD is employed, the latency can be reduced by transmitting UL signals that user terminals transmit in accordance with UL control information, DL data and so on transmitted in a DL subframe, in the UL subframe that is associated with this DL subframe. Also, the present inventors have found out that the same frame format can be used as in the case of applying TDD can be used. Note that the UL subframe that is associated with a DL subframe is, for example, an UL subframe having the same subframe index as that of the DL subframe.

In addition, the present inventors have come up with the idea of configuring a predetermined offset so that the time (start time) a UL subframe starts comes after the time the DL subframe associated with that UL subframe begins. In FDD, the frequency band varies between DL communication and UL communication, so that, even when UL data is transmitted in a UL subframe that is associated with a DL subframe in which DL control information (for example, a UL grant) is transmitted, it is not necessary to configure a gap (GP) period.

Now, the radio communication method according to one embodiment of the present invention will be described below. Note that, in the present embodiment, subframes may be one ms, which is the same as in existing LTE systems, or may be shorter than one ms, longer than one ms, and so on. Furthermore, the duration of each symbol in subframes may be the same as in existing LTE systems, may be shorter than in existing LTE systems, or may be longer than in existing LTE systems. Furthermore, the number of symbols in a subframe may be the same as or different from that in existing LTE systems.

Furthermore, a subframe may be referred to as a "transmission time interval (TTI)," a "scheduling unit (SU)" and so on. A subframe (one ms), if shorter than one ms, may be referred to as a "short subframe," "short TTI," and so on. Meanwhile, a subframe from existing LTE systems is also referred to as an "LTE subframe," a "normal TTI," a "long TTI," and so on.

Furthermore, the DL sounding control according to the present embodiment may be applied to the above-described dynamic subframes in lean radio frames. That is to say, subframes in the following description may refer to the above-described dynamic subframes in lean radio frames, or may refer to fixed DL subframes. Also, apart from subframes, the present embodiment can be applied to communication systems in which communication is carried out using predetermined time intervals (for example, time periods that resemble subframes).

### <TDD Frame Format>

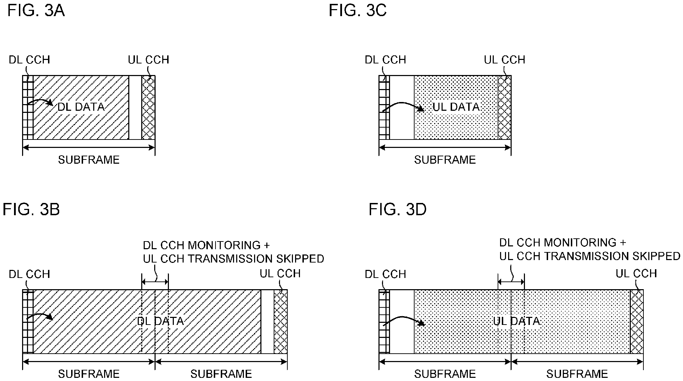

FIGs. 3 show examples of frame formats for use when TDD is used. FIGs. 3A and 3B show cases where DL signals are scheduled in dynamic subframes, and FIGs. 3C and 3D show cases where UL signals are scheduled in dynamic subframes.

FIG. 3A shows a case where DL data that is scheduled by downlink control information (for example, a DL assignment), and uplink control information, are transmitted in a predetermined subframe. The downlink control information (DCI) can be transmitted using a downlink control channel (DL CCH), and the uplink control information (UCI) can be transmitted using an uplink control channel (UL CCH). Note that a gap (GP) period is configured between the DL data and the uplink control channel.

FIG. 3B shows a case where DL control information schedules the DL data in the subframe in which this DL control information is transmitted, and subsequent subframes. To be more specific, FIG. 3B shows a case where DL data that is transmitted over two subframes is scheduled by DL control information provided in one subframe.

In this case, the area between the multiple subframes in which the DL data is transmitted may be used as a field for assigning DL data, instead of assigning the downlink control channel and/or the uplink control channel. This makes it possible to control a user terminal to receive DL data, without detecting (monitoring) the downlink control channel configured between consecutive subframes, and/or transmitting the uplink control channel.

An HARQ-ACK and/or the like in response to the DL data transmitted in each subframe may be transmitted using the uplink control information in each subframe, or may be transmitted using the uplink control information in a subsequent subframe. Furthermore, feedback signals such as HARQ-ACKs in response to DL data in a plurality of different subframes may be multiplexed and transmitted via the uplink control channel.

FIG. 3C shows a case where UL data that is scheduled by downlink control information (for example, a UL grant), and uplink control information, are transmitted in a predetermined subframe. Downlink control information can be transmitted using the downlink control channel, and uplink control information can be transmitted using the uplink control channel. Note that a gap (GP) period is configured between the downlink control channel and the UL data.

FIG. 3D shows a case where DL control information schedules the UL data in the subframe in which this DL control information is transmitted, and a subsequent subframe. To be more specific, FIG. 3D shows a case where UL data that is transmitted over two subframes is scheduled by UL control information provided in one subframe.

In this case, the area between the multiple subframes in which the UL data is transmitted may be used as a field for assigning UL data, instead of assigning the downlink control channel and/or the uplink control channel. This makes it possible to control a user terminal to transmit UL data, without detecting (monitoring) the downlink control channel configured between consecutive subframes, and/or transmitting the uplink control channel.

In FIGs. 3C and 3D, the downlink control channel (or downlink control information) and the UL data scheduled by this downlink control channel may be mapped in different subframes.

Thus, in TDD, subframes can be configured so that a given subframe (or a time interval to resemble a subframe) at least contains the DL control channel, unless a radio base station explicitly specifies that the DL control channel is not present. Furthermore, a given subframe may be configured so that, in addition to the DL control channel, at least one of a DL data channel, a UL data channel, a reference signal and a UL control channel is contained.

Unless the radio base station explicitly indicates that the DL control channel is not present, in each subframe, the user terminal can attempt receiving/detecting the DL control channel. When, as shown in the examples of FIGs. 3B and 3D, downlink data and/or uplink data are scheduled over multiple subframes, the user terminal can be controlled not to try receiving/detecting the DL control channel in periods where data is scheduled. Thus, the cycle of receiving/detecting the DL control channel can be determined based on the duration of subframes.

### <FDD Frame Format>

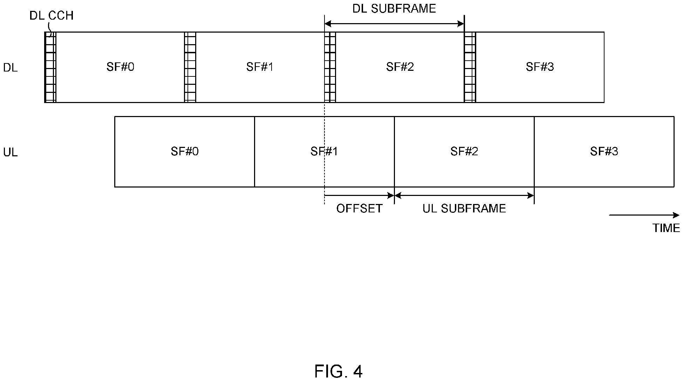

FIG. 4 shows an example of a frame format for use when FDD is employed. In FDD, a given DL subframe (or a time interval that resembles a subframe) can be configured to contain at least the DL control channel, as in TDD. Furthermore, a given subframe can be configured so that, in addition to the DL control channel, at least one of a DL data channel and a reference signal is contained.

Furthermore, in FDD, UL subframes are provided in association with each DL subframe. The UL subframe that is associated with one DL subframe is, for example, the UL subframe carrying the same subframe index.

Also, the beginning of a DL subframe (or its top position) is configured earlier in time than the starting time of the UL subframe associated with that DL subframe. In other words, the time at which a UL subframe starts is configured to come after the time at which the DL subframe associated with that UL subframe begins.

To be more specific, an offset is applied to the starting time of DL subframes and UL subframes. FIG. 4 shows a case where a predetermined offset is configured so that the time at which a UL subframe starts comes after the time at which the DL subframe associated with that UL subframe begins. Offsets are preferably introduced in a state in which control for changing the timings of transmission in UL transmission and DL transmission (for example, timing advance) is not applied. Furthermore, an offset may have a larger value than the subframe duration (for example, one ms).

Timing advance (TA) refers to the control for adjusting (making earlier) the transmission timing of a user terminal in order to coordinate with the timing of receipt on the radio base station side, reserve time for switching from UL receipt to DL transmission, and so on. The user terminal exerts control so that the timing of UL transmission becomes a predetermined period earlier, in accordance with TA commanded by the radio base station.

The offsets to be configure in DL subframes and UL subframes may be defined in advance in the specification, may be reported from the radio base station to the user terminal through higher layer signaling (for example, RRC signaling, broadcast information, etc.) and so on. For example, the radio base station may report a plurality of candidate offsets to the user terminal in advance through higher layer signaling, and indicate the offset to be actually applied, to the user terminal, in downlink control information.

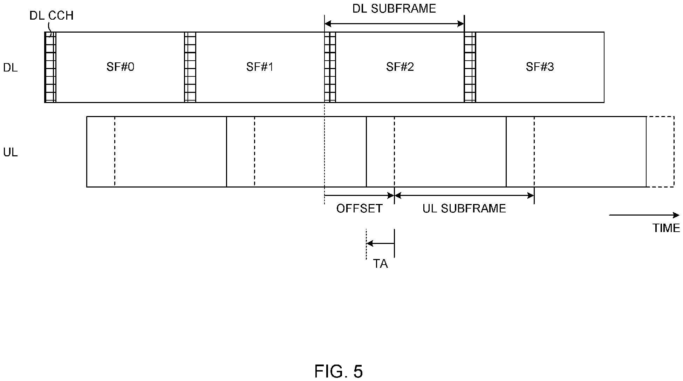

Also, when timing advance (TA) is employed, the user terminal can bring the timing of UL transmission ahead (adjust the UL transmission timing to be earlier) from the state an offset is configured. In the case shown in FIG. 5, a predetermined offset is configured so that the time at which a UL subframe starts comes after the time at which the DL subframe associated with that UL subframe begins, TA is applied so as to make starting timing of the UL subframe is brought earlier.

Even when TA is applied, it is preferable to configure offsets so that at least the time at which a UL subframe starts comes after the time the DL subframe associated with that UL subframe begins. For example, the offsets can be configured taking TA into account (so as to be larger than the maximum value of TA). For example, an offset can be configured to be greater than the maximum value of TA and less than the duration of subframes (for example, one ms). Alternatively, as mentioned earlier, the offsets may be configured larger than the subframe duration.

### <HARQ-ACK Transmission>

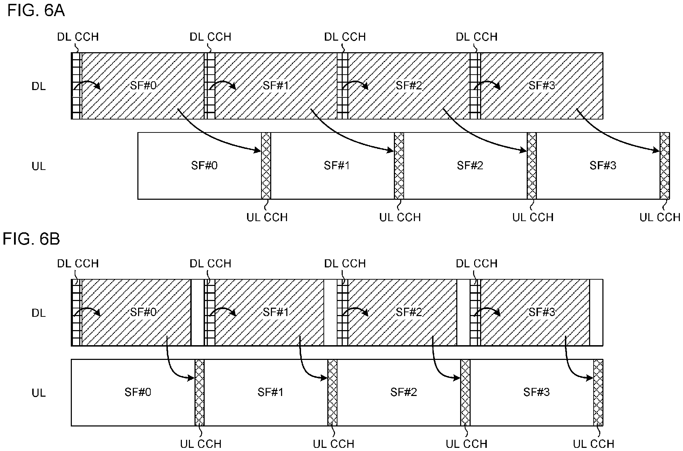

FIGs. 6 show examples of the method of transmitting delivery acknowledgment signals (HARQ-ACK). FIGs. 6 show cases where an HARQ-ACK in response to a DL signal (for example, DL data) transmitted in a predetermined DL subframe is transmitted in the UL subframe associated with the predetermined DL subframe.

When offsets are configured in DL subframes and UL subframes, the user terminal feeds back an HARQ-ACK in response to the DL data allocated in a predetermined DL subframe, in a UL subframe that is configured to begin at a later time (see FIG. 6A). In this case, unlike the case where the DL subframe and the UL subframe start at the same timing, there is no need to provide a gap (GP).

Normally, when an HARQ-ACK is transmitted in response to DL data, the HARQ-ACK is fed back after the DL data is received. Therefore, when the timing (start timing) at which a DL subframe starts and the timing at which a UL subframe starts are configured the same (without an offset), it is necessary, as in TDD, to provide a gap (GP) period so as to prevent the receipt of the DL data and the feedback of the HARQ-ACK from overlapping each other in the same time period (see FIG. 6B).

In FDD where different frequencies are used for UL communication and DL communication, providing gap periods leads to producing overhead that serves no purpose. Therefore, as shown in FIG. 6A, by providing offsets and making UL subframes start at later timings than DL subframes, it is possible to make gap periods unnecessary, and, consequently, reduce the deterioration of spectral efficiency. Also, although the timing to transmit the UL control channel is delayed by the offset as compared with TDD, it is possible to control UL transmission with the same latency as in TDD. Also, it is possible to secure processing time to match the offset, in the user terminal.

Note that if the priority of reducing latency is higher than the spectral efficiency in UL transmission, the structure of FIG. 6B may be used.

### <UL Data Transmission>

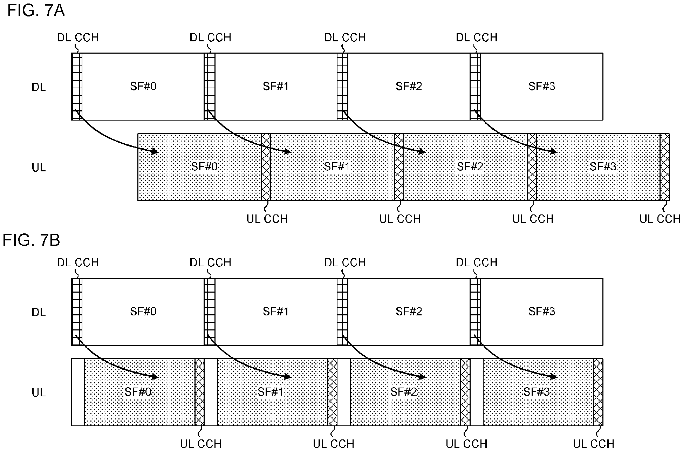

FIGs. 7 show examples of the method of transmitting UL data. FIGs. 7 shows cases where UL data that is specified by DL control information (UL grant) transmitted in a predetermined DL subframe is transmitted in a UL subframe that is associated with the predetermined DL subframe.

When offsets are configured in DL subframes and UL subframes, the user terminal transmits the UL data specified by a UL grant in a predetermined DL subframe, in a UL subframe that is configured to begin at a later time (see FIG. 7A). In this case, unlike when the DL subframe and the UL subframe start at the same timing, there is no need to provide a gap (GP).

Usually, when UL data (UL data channel) is transmitted based on a DL control channel (for example, a UL grant), the UL data is transmitted after the UL grant is received. Therefore, when the timing at which a DL subframe starts and the timing at which a UL subframe starts are configured the same (without an offset), it is necessary, as in TDD, to provide a gap (GP) period so as to prevent the DL control channel and the UL data channel from overlapping each other in the same time period (see FIG. 7B).

In FDD where different frequencies are used for UL communication and DL communication, providing gap periods leads to producing overhead that serves no purpose. Therefore, as shown in FIG. 7A, by providing offsets and making UL subframes start at later timings than DL subframes, it is possible to make gap periods unnecessary, and, consequently, reduce the deterioration of spectral efficiency. Also, although the timing to transmit the UL data channel is delayed by the offset as compared with TDD, it is possible to control UL transmission with the same latency as in TDD. Also, it is possible to secure processing time to match the offset, in the user terminal.

Note that if the priority of reducing latency is higher than the spectral efficiency in UL transmission, the structure of FIG. 7B may be used.

### (Variation 1)

Although cases have been shown with the above description where a DL subframe that contains a DL control channel and a DL data channel that is scheduled by this DL control channel, and a UL subframe, in which an HARQ-ACK in response to this DL data is transmitted, have the same subframe index, this is by no means limiting. The UL subframe associated with a predetermined DL subframe may be a UL subframe to which a different subframe index is assigned.

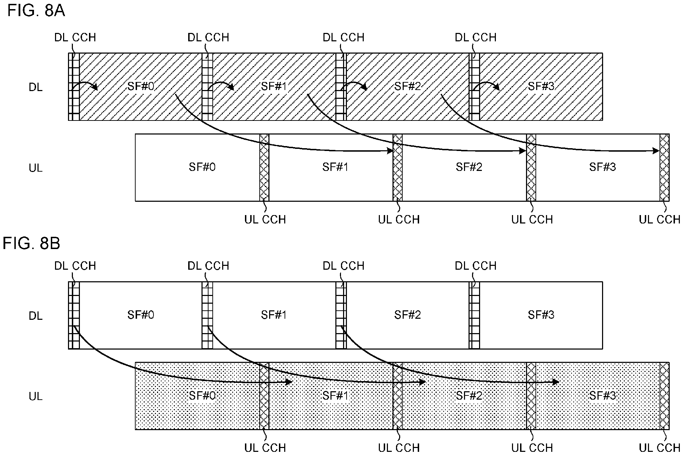

For example, the user terminal may feedback an HARQ-ACK in response to the DL data allocated in a predetermined DL subframe (for example, DL SF #0), in a UL subframe that comes n subframes later (for example, in UL SF #0+n). FIG. 8A shows a case where n is 1. In this case, as shown in FIG. 8A, offsets may be configured so as to shift the starting timings of DL subframe and UL subframes, or a structure which configures no offsets may be employed.

Although cases have been shown with the above description where a DL subframe that contains a DL control channel (UL grant), and a UL subframe, in which UL data is transmitted based on this UL grant, have the same subframe index, this is by no means limiting. The UL subframe that is associated with a predetermined DL subframe may be a UL subframe to which a different subframe index is assigned.

For example, the user terminal may feedback UL data in response to a UL grant transmitted in a predetermined DL subframe (for example, DL SF #0), in a UL subframe that comes n subframes later (for example, in UL SF #0+n). FIG. 8B shows a case where n is 1. In this case, as shown in FIG. 8B, offsets may be configured so as to shift the starting timings of DL subframe and UL subframes, or a structure which configures no offsets may be employed.

The radio base station can configure information about the timing (UL subframe or n) to feed back an HARQ-ACK to each user terminal through high layer signaling and so on.

The user terminal may report the timing that is available for configuration in the subject terminal, to the radio base station, in advance, as terminal capability information (UE capability). For example, if the user terminal has high processing capabilities, the user terminal transmits, to the radio base station, information (for example, n=0) to the effect that the user terminal can communicate using UL subframes having the same subframe indices as DL subframes. If the user terminal having low processing capabilities, the user terminal transmits, to the radio base station, information (for example, n=1 to 3) to the effect that the user terminal can communicate using UL subframes having different subframe indices from those of DL subframes.

Based on the information reported from the user terminal, the radio base station can decide the UL transmission timing and report this to the user terminal. In this way, it is possible to adequately control UL transmission timing based on the capabilities of each user terminal.

### (Variation 2)

Although cases have been shown with the above description where the scheduling of the channel for feeding back UCI (UL control channel) and the UL data channel based on UL grant is controlled by configuring offsets in DL subframes and UL subframes, the applicable signals and channels are by no means limited to these.

The method of applying an offset to the starting time of subframes and controlling TDD and FDD in common can be applied in any of the scheduling of random access preambles (see FIG. 2C), the scheduling of DL sounding reference signals (or CSI-RSs) (see FIG. 2D), and the scheduling of UL sounding reference signals (see FIG. 2E).

This makes it unnecessary to make a gap (GP) as compared with the case where offset is not applied to the DL subframe and the UL subframe in FDD, and it is possible to improve the spectral efficiency.

### (Radio Communication System)

Now, the structure of a radio communication system according to an embodiment of the present invention will be described below. In this radio communication system, communication is performed using one or a combination of the radio communication methods according to the above aspects of the present invention.

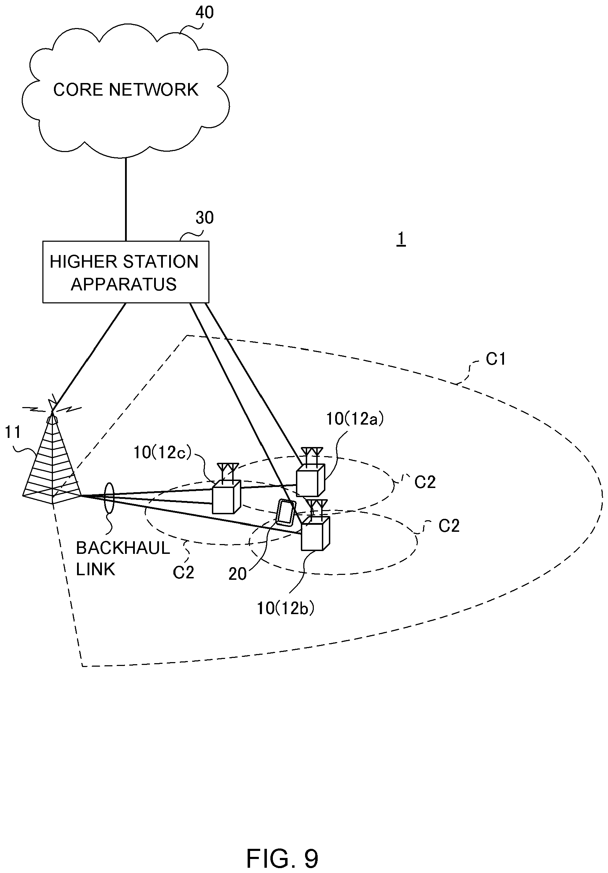

FIG. 9 is a diagram to show an example of a schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "FRA (Future Radio Access)," "New-RAT (Radio Access Technology)" and so on, or may be seen as a system to implement these.

The radio communication system 1 shown in FIG. 9 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and other radio access schemes may be used.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. Delivery acknowledgment information (also referred to as, for example, "retransmission control information," "HARQ-ACKs," "ACK/NACKs," etc.) of HARQ (Hybrid Automatic Repeat reQuest) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgement information and so on are communicated by the PUCCH. By means of the PRACH, random access preambles for establishing connections with cells are communicated.

In the radio communication systems 1, the cell-specific reference signal (CRS: Cell-specific Reference Signal), the channel state information reference signal (CSI-RS: Channel State Information-Reference Signal), the demodulation reference signal (DMRS: DeModulation Reference Signal), the positioning reference signal (PRS) and so on are communicated as downlink reference signals. Also, in the radio communication system 1, the measurement reference signal (SRS: Sounding Reference Signal), the demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### <Radio Base Station>

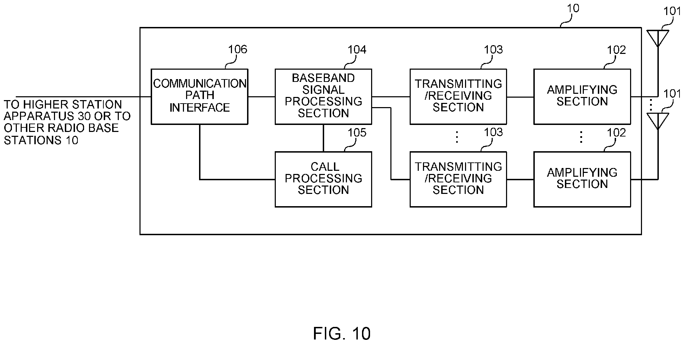

FIG. 10 is a diagram to show an example of an overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 through the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for the uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 transmit DL signals (for example, downlink control information, downlink data, etc.) to transmit to user terminals in DL subframes, and receive UL signals (for example, uplink control information, uplink data, etc.) transmitted from the user terminals in UL subframes. When FDD is used, the transmitting/receiving sections 103 transmit DL signals and receive UL signals using different frequency regions.

Also, when a predetermined offset is configured so that the time at which a UL subframe starts comes after the time at which the DL subframe associated with that UL subframe begins, the transmitting/receiving sections 103 report information about the offset to the user terminals. The offset can be configured larger than the maximum value of TA and smaller than the subframe duration (for example, one ms). Alternatively, the offset may be configured larger than the subframe duration.

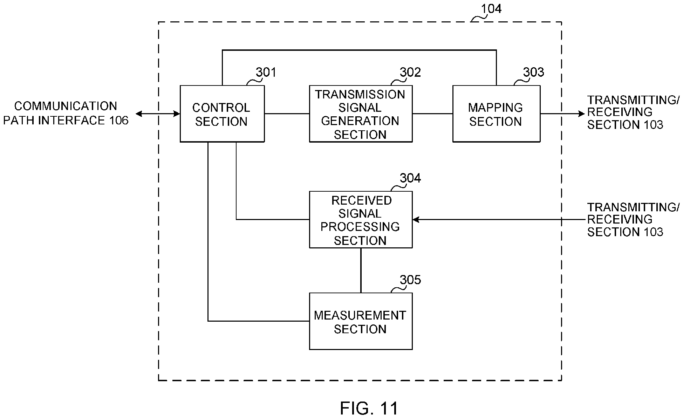

FIG. 11 is a diagram to show an example of a functional structure of a radio base station according to the present embodiment. Note that, although FIG. 11 primarily shows functional blocks that pertain to characteristic parts of the present embodiment, the radio base station 10 has other functional blocks that are necessary for radio communication as well. As shown in FIG. 11, the baseband signal processing section 104 has a control section (scheduler) 301, a transmission signal generation section 302, a mapping section 303, a received signal processing section 304 and a measurement section 305.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH. The control section 301 controls the generation of downlink control signals (for example, delivery acknowledgement information and so on) and downlink data signals, based on whether or not retransmission control is necessary, decided in response to uplink data signals, and so on. Also, the control section 301 controls the scheduling of synchronization signals (for example, the PSS (Primary Synchronization Signal)/SSS (Secondary Synchronization Signal)), downlink reference signals such as the CRS, the CSI-RS, the DM-RS, and so on.

In addition, the control section 301 controls the scheduling of uplink data signals that are transmitted in the PUSCH, uplink control signals that are transmitted in the PUCCH and/or the PUSCH (for example, delivery acknowledgment information), random access preambles that are transmitted in the PRACH, uplink reference signals, and so on.

The control section 301 controls the transmission and receipt of signals by applying a radio frame format in which a predetermined offset is configured so that the time at which a UL subframe starts comes after the time at which the DL subframe associated with that UL subframe begins.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (UL control signals, UL data signals, UL reference signals and so on). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

The measurement section 305 may measure the received power (for example, the RSRP (Reference Signal Received Power)), the received quality (for example, RSRQ (Reference Signal Received Quality)), channel states and so on of the received signals. The measurement results may be output to the control section 301.

### <User Terminal>

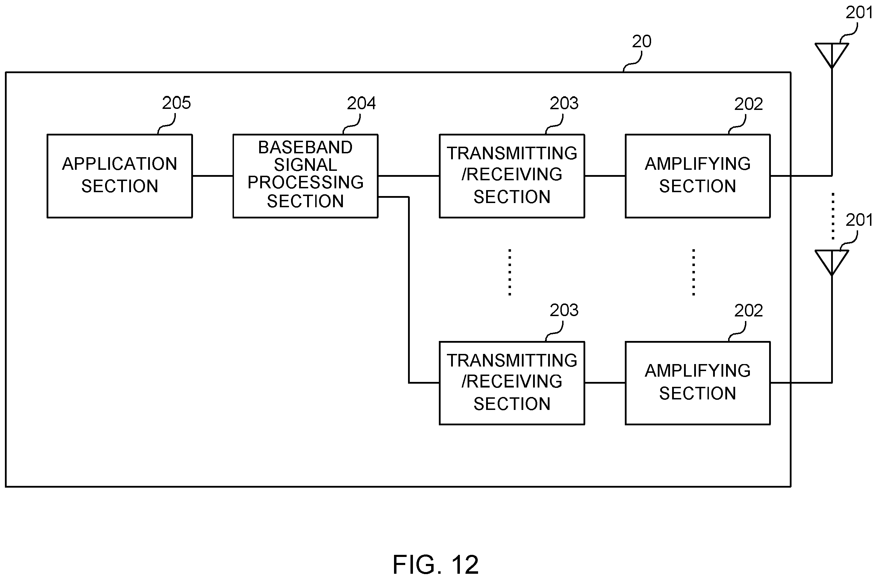

FIG. 12 is a diagram to show an example of an overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 transmit UL signals (for example, uplink control information, uplink data, etc.) to transmit to the radio base station in UL subframes, and receive DL signals (for example, downlink control information, downlink data, etc.) transmitted from the radio base station in DL subframes. When FDD is used, the transmitting/receiving sections 203 transmit UL signals and receive DL signals using different frequency regions.

When a predetermined offset is configured so that the time at which a UL subframe starts comes after the time at which the DL subframe associated with that UL subframe begins, the transmitting/receiving sections 203 receive information about the offset from the radio base station.

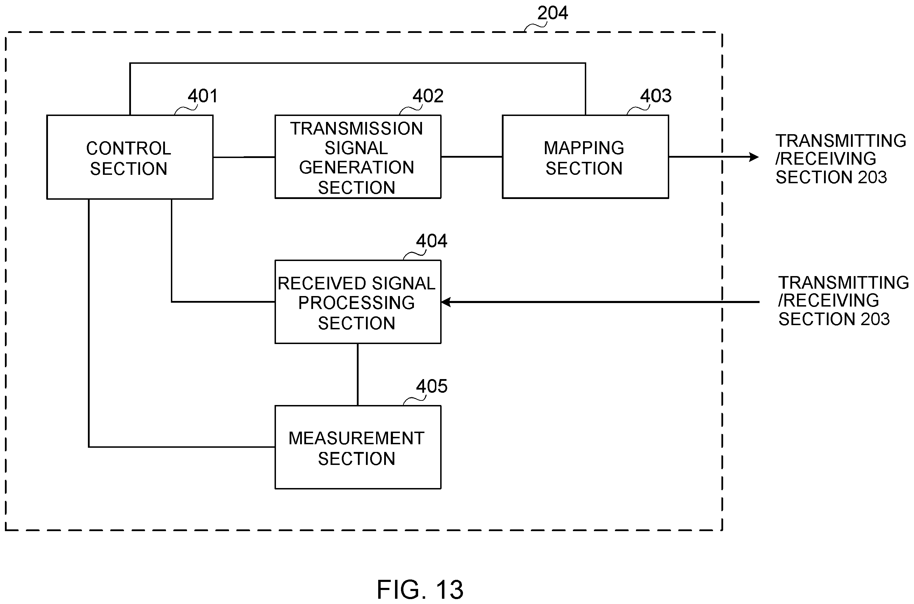

FIG. 13 is a diagram to show an example of a functional structure of a user terminal according to the present embodiment. Note that, although FIG. 13 primarily shows functional blocks that pertain to characteristic parts of the present embodiment, the user terminal 20 has other functional blocks that are necessary for radio communication as well. As shown in FIG. 13, the baseband signal processing section 204 provided in the user terminal 20 at least has a control section 401, a transmission signal generation section 402, a mapping section 403, a received signal processing section 404 and a decision section 405.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the decision section 405, and so on.

The control section 401 acquires the downlink control signals (signals transmitted in the PDCCH/EPDCCH) and downlink data signals (signals transmitted in the PDSCH) transmitted from the radio base station 10, via the received signal processing section 404. The control section 401 controls the generation of uplink control signals (for example, delivery acknowledgement information and so on) and/or uplink data signals based on whether or not retransmission control is necessary, decided in response to the downlink control signals, downlink data signals and so on.

The control section 401 controls the receipt of DL signals and the transmission of UL signals in frequency division duplex (FDD), which use different frequencies. Furthermore, the control section 401 can control the transmission and receipt of signals by configuring a predetermined offset so that the time at which a UL subframe starts comes after the time at which the DL subframe associated with that UL subframe begins (see FIG. 4).

When timing advance is applied, the control section 401 can perform control so that the transmission timing of a UL signal becomes earlier, from a predetermined offset, by the time specified by timing advance (see FIG. 5). Note that the predetermined offset can be configured larger than the maximum value of TA and smaller than the subframe duration (for example, one ms). Alternatively, the predetermined offset may be configured larger than the subframe duration.

In addition, the control section 401 can control the delivery acknowledgment signal (HARQ-ACK) in response to a DL signal received in a predetermined DL subframe to be transmitted in the UL subframe of the same subframe index (see FIGs. 6). Furthermore, based on downlink control information received in a predetermined DL subframe, the control section 401 can exert control so that UL data is transmitted in the UL subframe having the same subframe index (see FIG. 7). Alternatively, the control section 401 may use the UL subframe whose subframe index is larger by n, instead of the UL subframe having the same subframe index as the DL subframe (see FIGs. 8).

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is contained in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of DL signals (for example, downlink control signals transmitted from the radio base station, downlink data signals transmitted in the PDSCH, and so on). The received signal processing section 404 outputs the information received from the radio base station 10, to the control section 401 and the decision section 405. The received signal processing section 404 outputs, for example, broadcast information, system information, RRC signaling, DCI and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The decision section 405 makes retransmission control decisions (ACKs/NACKs) based on the decoding results in the received signal processing section 404, and, furthermore, outputs the results to the control section 401. When downlink signals (PDSCH) are transmitted from multiple CCs (for example, six or more CCs), retransmission control decisions (ACKs/NACKs) are made on a per CC basis, and output to the control section 401. The decision section 405 can be constituted by a decision circuit or decision apparatus that can be described based on general understanding of the technical field to which the present invention pertains.

### <Hardware Structure>

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically coupled, or may be realized by directly and/or indirectly connecting two or more physically and/or logically separate pieces of apparatus (via wire or wireless, for example) and using these multiple pieces of apparatus.

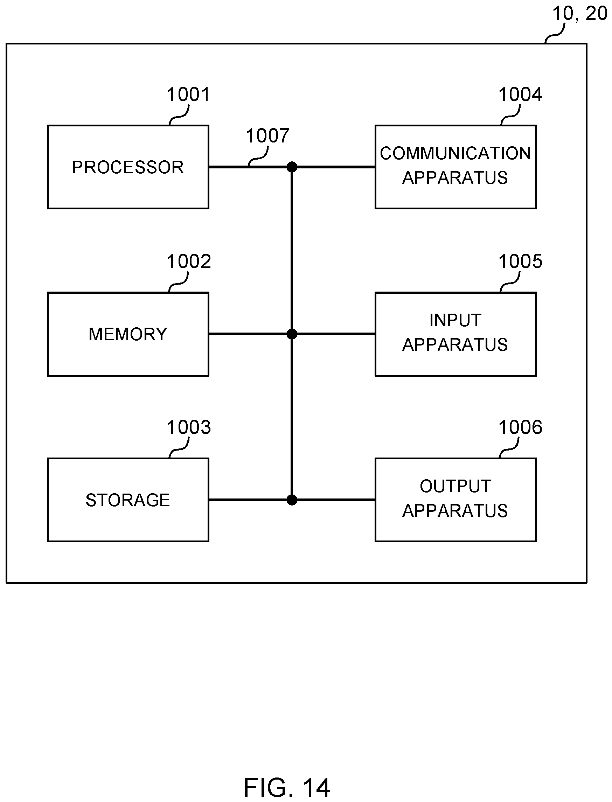

That is, a radio base station, a user terminal and so on according to an embodiment of the present invention may function as a computer that executes the processes of the radio communication method of the present invention. FIG. 14 is a diagram to show an example of a hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented at the same time, in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and the like for implementing the radio communication methods according to present embodiment.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these types of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier" (CC) may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frames, a subframe, a slot and a symbol may be each called by other applicable names. For example, one subframe may be referred to as a "transmission time interval (TTI)," or a plurality of consecutive subframes may be referred to as a "TTI," and one slot may be referred to as a "TTI." That is, a subframe and a TTI may be a subframe (one ms) in existing LTE, may be a shorter period than one ms (for example, one to thirteen symbols), or may be a longer period of time than one ms.

Here, a TTI refers to the minimum time unit of scheduling in radio communication, for example. For example, in LTE systems, a radio base station schedules the allocation of radio resources (such as the frequency bandwidth and transmission power that can be used by each user terminal) for each user terminal in TTI units. Note that the definition of TTIs is not limited to this. The TTI may be the transmission time unit of channel-encoded data packets (transport blocks), or may be the unit of processing in scheduling, link adaptation and so on.

A TTI having a time duration of one ms may be referred to as a "normal TTI (TTI in LTE Rel. 8 to 12)," a "long TTI," a "normal subframe," a "long subframe," etc. A TTI that is shorter than a normal TTI may be referred to as a "shortened TTI," a "short TTI," a "shortened subframe," a "short subframe," or the like.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB: Physical RB)," a "PRB pair," an "RB pair," or the like.

Furthermore, a resource block may be comprised of one or more resource elements (REs). For example, one RE may be a radio resource field of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and cyclic prefix (CP) length can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, broadcast information (the MIB (Master Information Blocks) and SIBs (System Information Blocks) and so on) and MAC (Medium Access Control) signaling, other signals or combinations of these.

Note that physical layer signaling may be referred to as "L1/L2 (Layer 1/Layer 2) control information" (L1/L2 control signals), "L1 control information" (L1 control signal) and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, predetermined information (for example, reporting of information to the effect that "X holds") does not necessarily have to be reported explicitly, and can be reported in an implicit manner (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation and microwaves), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs: Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by a base station may, in some cases, be performed by its upper node. In a network comprised of one or more network nodes, with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), GSM (registered trade mark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate systems and/or next-generation systems that are enhanced based on these.

The phrase "based on" as used in this specification does not mean "based only on," unless otherwise specified. In other words, the phrase "based on" means both "based only on" and "based at least on."

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure, ascertaining and so on). Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-092683, filed on May 2, 2016, including the specification, drawings and abstract, is incorporated herein by reference in its entirety.

## Claims

1. A user terminal comprising:
a receiving section that receives a DL signal in a DL subframe;
a transmission section that transmits a UL signal in a UL subframe; and
a control section that controls reception of the DL signal and transmission of the UL signal which use different frequencies in frequency division duplex (FDD),
wherein a given offset is configured so that a start time of the UL subframe comes after a start time of a DL subframe that is associated with the UL subframe.

2. The user terminal according to claim 1 wherein, when timing advance is applied, the control section makes a timing for transmitting the UL signal earlier by a time specified by the timing advance from the given offset.

3. The user terminal according to claim 1 or claim 2, wherein the control section controls to transmit a delivery acknowledgment signal in response to a DL signal received in a given DL subframe, in a UL subframe having a same subframe index.

4. The user terminal according to any one of claims 1 to 3, wherein the control section controls to transmit UL data in a UL subframe having a same subframe index, based on downlink control information that is received in a given DL subframe.

5. A radio communication method for a user terminal that communicates with a radio base station, the radio communication method comprising:
receiving a DL signal in a DL subframe;
transmitting a UL signal in a UL subframe; and
controlling reception of the DL signal and transmission of the UL signal which use different frequencies in frequency division duplex (FDD), ,
wherein a given offset is configured so that a start time of the UL subframe comes after a start time of a DL subframe that is associated with the UL subframe.
